# FASCICULE DE BREVET EUROPEEN

(11) **EP 0 562 907 B1**
(45) Date de publication et mention de la délivrance du brevet: **08.11.1995**
(21) Numéro de dépôt: 93400647.9
(22) Date de dépôt: 15.03.1993
(51) Int. Cl.: F23N 1/02, F23N 5/18, G05D 11/00

(54) **Dispositif régulateur de l'admission du gaz à une chaudière à gaz à condensation**
Regelvorrichtung für die Gaszuführ eines Kondensationheizkessels für Gas
Control device for the supply of gas to a gas fired condensation boiler

(30) Priorité: 23.03.1992 FR 9203444
(43) Date de publication de la demande: 29.09.1993
(73) Titulaire: SAUNIER DUVAL EAU CHAUDE CHAUFFAGE - SDECC, F-94132 Fontenay Sous Bois Cédex (FR)
(72) Inventeur: Veislinger, Jean-Luc, F-44300 Nantes (FR)
(74) Mandataire: Lhuillier, René

(56) Documents cités:
- FR-A- 2 295 353
- FR-A- 2 522 774
- GB-A-J25660 (HANSFORD)

## Description

L'invention se rapporte aux chaudières à gaz à condensation et concerne plus particulièrement un dispositif dit "régulateur à zéro" autorisant le réglage d'un petit débit et d'un grand débit de gaz admis au brûleur de l'appareil.

On sait que dans les chaudières individuelles à condensation, les produits de combustion provenant du brûleur sont refroidis au contact des parois d'un échangeur-condenseur traversé par l'eau de retour du circuit de chauffage. Pour que la condensation soit efficace, il faut maitriser parfaitement les proportions du mélange air-gaz admis au brûleur.

En effet un trop grand excès d'air entraînerait une dilution de la vapeur d'eau et un abaissement du point de rosée, donc du rendement de la chaudière, et cela doit être fait sur toute la plage de puissance de l'appareil. A cet effet on utilise un principe connu qui consiste à asservir l'arrivée du gaz à la vitesse du ventilateur destiné à introduire le mélange air-gaz à l'entrée du brûleur, pour obtenir le mélange qui convient à une très bonne combustion tout en assurant un excès d'air constant au brûleur.

Le régulateur utilisé à cette fin fournit à un venturi le gaz nécessaire et suffisant pour le mélange, en fonction de la dépression-créée au col du venturi, selon la vitesse du ventilateur. Ledit régulateur placé sur le conduit d'arrivé du gaz à l'appareil comporte une membrane rappelée par un ressort réglable, reliée à un petit clapet de détente qui selon la pression de distribution du gaz à son arrivée, obture plus ou moins un orifice d'admission à une chambre de détente directement reliée à un injecteur. Un tel régulateur est connu du document GB-A-0 025 660.

Ce régulateur permet d'assurer correctement un bon réglage pour un petit débit de gaz, mais n'est pas précis pour assurer la régulation à grand débit. En outre le réglage du ressort de rappel de la membrane s'avère délicat.

La Demanderesse a donc été conduite à définir un autre type de régulateur ne présentant pas ces inconvénients et qui de surcroît est de réalisation et de mise en oeuvre plus simple.

Aussi un objet de la présente invention consiste en un dispositif régulateur de l'admission du gaz à une chaudière à condensation, dans lequel le gaz est admis dans une chambre de détente en fonction du degré d'ouverture d'un petit clapet obturateur relié à une membrane localisée dans ladite chambre, dispositif selon lequel le ressort de rappel du clapet obturateur est réglable de l'extérieur et d'un côté du régulateur à l'aide d'un manchon tournant et selon lequel un réglage complémentaire de l'écartement entre la membrane et ledit clapet est assuré par une vis de réglage accessible de l'extérieur et de l'autre côté du régulateur.

Selon une caractéristique particulière de l'invention, le clapet obturateur dispose d'un puits intérieur lui permettant de s'emmancher librement sur l'extrémité libre d'un axe solidaire de la membrane, ledit axe traversant l'orifice qui fait communiquer le conduit d'arrivée de gaz avec la chambre de détente.

Les caractéristiques et avantages de l'invention ressortiront également de la description suivante se référant aux dessins qui représentent :
Figure 1 une vue schématique générale de l'ensemble d'admission air-gaz à une chaudière à condensation
Figure 2 une vue en coupe à plus grande échelle du dispositif régulateur.

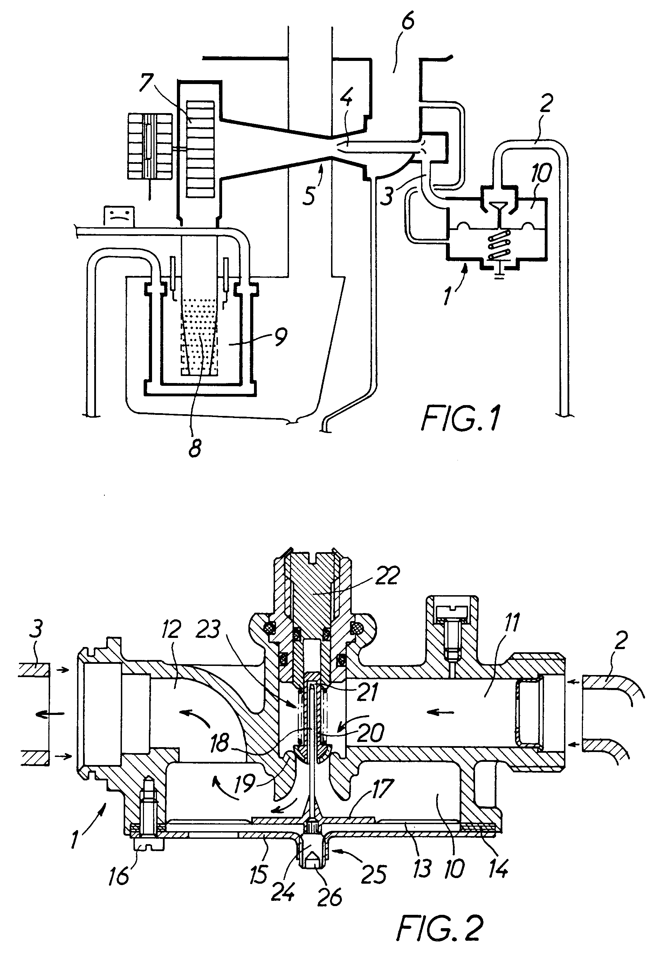

La figure 1 montre un ensemble assurant le mélange air-gaz, dans lequel on voit le dispositif régulateur défini dans son ensemble par la référence 1. La chambre 10 d'admission dans le régulateur du gaz provenant d'une tubulure d'arrivée 2, communique par une tubulure 3 avec un injecteur 4. Ce dernier débouche au col d'un venturi 5 du conduit d'entrée d'air 6 aspiré par le ventilateur 7. Celui-ci injecte le mélange air-gaz au brûleur 8 de la chambre de combustion 9 d'une chaudière à condensation.

La figure 2 représente en' détail le dispositif régulateur 1. Il forme un boîtier fermé dans lequel le gaz est admis à la chambre 10 par un conduit 11 raccordé à la tubulure d'arrivée 2. De la chambre 10 le gaz s'échappe vers la tubulure de sortie 3 par un conduit 12. La chambre 10 est fermée par une membrane 13 maintenue en place par l'intermédiaire d'un joint plat 14 à l'aide d'un capot 15 fixé par un jeu de vis 16. Un disque rigide central 17 de la membrane 13 est solidaire d'un axe 18 qui traverse un orifice faisant communiquer le conduit 11 avec la chambre 10. Cet orifice constitue un siège 19 pour un clapet obturateur profilé 20 de forme générale cylindrique avec une tête arrondie du côté du siège, lequel dispose d'un puits intérieur 21 lui permettant de s'emmancher librement sur l'extrémité libre dudit axe 18. Le clapet 20 coulisse lui-même à l'intérieur d'un manchon 22 fileté extérieurement, lequel manchon étant réglable de l'extérieur pour modifier son écartement par rapport au siège du clapet. Ce réglage influe sur la force d'un ressort de rappel 23 intercalé entre la tête arrondie du clapet et ledit manchon.

Du côté de la membrane 13, l'axe 18 traverse le disque rigide 17 et coopère avec une petite vis réglable 24 dont un filetage extérieur prend dans le taraudage d'un orifice central 25 prévu dans le capot 15. La vis 24 équipée extérieurement de pans creux 26 permet, à l'aide d'un outil approprié de tourner la vis et de modifier par conséquent l'enfoncement de l'axe 18 dans le puits intérieur 21 du clapet 20, du fait que la rotation de la vis modifie l'écartement de la membrane 13 et du capot. Ceci permet de rattraper le jeu entre le fond du puits et l'axe 18.

On dispose ainsi d'un premier réglage du positionnement du clapet 20 par rapport à la position repos de la membrane. On a vu qu'un autre réglage de la force de rappel du ressort est assuré de l'autre côté par action sur le manchon 22. On peut ainsi effectuer aisément un réglage très fin du détenteur. Une telle disposition permet d'accéder au dispositif par le haut et par le bas pour assurer ces réglages.

En outre on atteint très facilement la membrane en ôtant le capot 15, ce qui facilite son positionnement au moment du montage.

## Revendications

1. Dispositif régulateur de l'admission du gaz à une chaudière à condensation, dans lequel le gaz est admis dans une chambre de détente en fonction du degré d'ouverture d'un petit clapet obturateur relié à une membrane localisée dans ladite chambre caractérisé en ce que le ressort de rappel (23) du clapet obturateur (20) est réglable de l'extérieur et d'un côté du régulateur (1) à l'aide d'un manchon tournant (22) et en ce que un réglage complémentaire de l'écartement entre la membrane (13) et ledit clapet est assuré par une vis de réglage (24) accessible de l'extérieur et de l'autre côté du régulateur.

2. Dispositif régulateur selon la revendication 1 caractérisé en ce que le clapet obturateur (20) dispose d'un puits intérieur (21) lui permettant de s'emmancher librement sur l'extrémité libre d'un axe (18) solidaire de la membrane (13), et en ce que ledit axe traverse l'orifice faisant communiquer le conduit d'arrivée de gaz (11) avec la chambre de détente (10).

3. Dispositif régulateur selon les revendications 1 et 2 caractérisé en ce que l'axe (18) traverse un disque central rigide (17) de la membrane (13) et coopère avec la vis de réglage (24).

4. Dispositif régulateur selon la revendication 3 caractérisé en ce que un filetage extérieur de la vis de réglage (24) prend dans le taraudage d'un orifice central (25) prévu dans le capot (15) qui ferme la chambre de détente (10).

## Claims

1. A device for regulating the admission of gas into a boiler with condensation, wherein the gas is admitted into an expansion chamber in accordance with the degree of opening of a small obturator valve connected to a membrane located in the said chamber, characterized in that the spring (23) for restoring the obturator valve (20) is adjustable from the outside and from one side of the regulator (1) by means of a rotating sleeve (22); and in that a complementary adjustment of the spacing between the membrane (13) and the said valve is ensured by means of a setscrew (24) that is accessible from the outside and from the other side of the regulator.

2. A regulator device according to claim 1, characterized in that the obturator valve (20) is provided with an internal well (21) allowing it to fit freely in the free end of a pin (18) joined to the membrane (13); and in that the said pin passes through the opening causing the gas intake pipe (11) to communicate with the expansion chamber (10).

3. A regulator device according to claims 1 and 2, characterized in that the pin (18) passes through a central rigid disk (17) of she membrane (13) and cooperates with the setscrew (24).

4. A regulator device according to claim 3, characterized in that an external thread of the setscrew (24) engages in the internal thread of a central opening (25) provided in the cap (15) which closes the expansion chamber (10).

## Patentansprüche

1. Regelvorrichtung für die Gaszufuhr eines Kondensationsheizkessels, in den Gas einem Expansionsraum in Abhängigkeit von dem Öffnungsgrad einer kleinen Schließvorrichtung zugeleitet wird, die mit einer in diesem genannten Raum angeordneten Membran verbunden ist, dadurch gekennzeichnet, daß die Rückstellfeder (23) der Schließvorrichtung (20) von außen und von der Seite des Reglers (1) mittels einer drehbaren Hülse (22) einstellbar ist, und daß eine ergänzende Einstellung des Abstandes zwischen der Membran (13) und der genannten Schließvorrichtung durch eine Regelschraube (24) erreicht ist, die von der Außenseite her und an der anderen Seite des Reglers zugänglich ist.

2. Regelvorrichtung nach Anspruch 1, dadurch gekennzeichnet, daß die Schließvorrichtung (20) eine innere Ausnehmung (21) aufweist, die ein freies Übergreifen des freien Endbereichs einer Achse (18) ermöglicht, welche mit der Membran (13) verbunden ist, und daß diese Achse die Öffnung durchquert, die die Gaszuleitung (11) mit der Expansionskammer (10) verbindet.

3. Regelvorrichtung nach den Ansprüchen 1 bis 2, dadurch gekennzeichnet, daß die Achse (18) durch eine zentrale, steife Scheibe (17) der Membran (13) hindurchläuft und mit der Stellschraube (24) zusammenwirkt.

4. Regelvorrichtung nach Anspruch 3, dadurch gekennzeichnet, daß ein Außengewinde der Stellschraube (24) in das Gewinde einer Zentralbohrung (25) eingreift, die in der Haube (15), welche die Expansionskammer (10) abschließt, vorgesehen ist.
